# EUROPEAN PATENT SPECIFICATION

(11) **EP 4 380 892 B1**
(45) Date of publication and mention of the grant of the patent: **11.06.2025**
(21) Application number: 21786603.7
(22) Date of filing: 04.08.2021
(51) Int. Cl.: C01B 3/38, B01J 8/06

(54) **APPARATUS FOR HYDROGEN PRODUCTION**
VORRICHTUNG ZUR WASSERSTOFFERZEUGUNG
APPAREIL DE PRODUCTION D'HYDROGÈNE

(43) Date of publication of application: 12.06.2024
(73) Proprietor: NEXTCHEM TECH S.p.A., 00156 Rome (IT)
(72) Inventor: COLOZZI, Michele, 00181 Rome (IT); PALO, Emma, 84091 Battipaglia (SA) (IT); ROMAGNUOLO, Salvatore, 00174 Rome (IT); RICCI, Ivan, 00148 Rome (IT); COCCIAGLIA, Alberto, 00100 Rome (IT); MASSINI, Stefano, 00148 Rome (IT); ANTONELLI, Menica, 00166 Rome (IT); TARASCHI, Stefania, 00148 Rome (IT)
(74) Representative: Santi, Filippo
(86) International application number: PCT/IT2021/000040
(87) International publication number: WO 2023/012837

(56) References cited:
- US-A1- 2006 213 369
- US-A1- 2007 051 041
- US-A1- 2020 354 216

## Description

The present invention concerns an apparatus for hydrogen production, which is also configured to ensure zero export steam.

As it is known, demand of hydrogen has reached almost 75 million of tons in 2018 and increases by approximately 6% per year [*IEA.org*/*reports*/*the-future-of-hydrogen, June 2019],* with more than 50% used for refinery applications as hydrotreating and hydrocracking and remaining fraction mainly for ammonia and methanol production.

Steam reforming is currently the most cost-effective technology to produce hydrogen, particularly in refineries, where natural gas or off gases are used as feedstock. Steam reforming of natural gas and light naphtha is the workhorse for such production being a quite efficient process, with the highest H₂/CO ratio and the lowest Cost of Production (CoP).

In steam reforming process, a carbon containing feedstock, namely natural gas, is reacted with steam according to the following reactions:
the steam reforming reaction

   CH₄ + H₂O = CO + 3H₂
and the water gas shift reaction

   CO + H₂O = CO₂ + H₂
to obtain a mixture of syngas.

The reaction is carried out in catalytic tubes, i.e. tubes installed in a furnace.

Overall, the reaction is strongly endothermic and thermal duty is supplied burning fuel in the radiant section of a Reforming furnace.

Given the necessity to burn fuel to sustain the endothermicity of the process, it is necessary to underline the strong environmental impact in terms of CO₂ emissions, that characterizes the process.

In particular, in steam reforming process, a part of CO₂ (typically ~50-60% of the total amount) is generated inside the process syngas in the steam reforming and water gas shift reactor downstream stages, and another part (40-50%) is additionally generated in the steam reformer furnace where heat provided by external fuel combustion supplies the necessary thermal input to the endothermic reaction [G. Collodi, Chemical Engineering Transactions 19 (2010) 37*].* It is estimated that around 0.9kg CO₂ are produced per Nm³ of H₂.

Main industrial sectors contributing to the stationary CO₂ emissions are represented by power plants and energy intensive industries. In particular, refinery sector contributes to around 6% of the total stationary CO₂ emissions [Jiri van Straelen, Frank Geuzebroek, Nicholas Goodchild, Georgios Protopapas, Liam Mahony, CO2 capture for refineries, a practical approach, Energy Procedia 1 (2009) 179-185*].* Steam reforming process accounts for at least up to 20% of the CO₂ emissions in refineries [J. van Straelen, F. Geuzebroek, N. Goodchild, G. Protopapas, L. Mahony, International Journal of greenhouse control, 4 (2010) 316*].*

According to IEA [*Jiri van Straelen, cit.*]*,* roughly 0,83 bn of tons of CO₂ are associated today to yearly hydrogen production. The importance of this carbon flow is such that in the coming years the CO₂ emissions associated to each single chemical process are going to become the first and major parameter to assess for technology selection including the one to make hydrogen.

As a matter of fact, the key challenge in achieving a carbon-neutral energy and production systems is to decarbonize the sectors that are currently heavily dependent on fossil fuel resources, such as oil and natural gas. The most promising option for future decarbonization of final energy and feedstock used in the chemical industry is to convert the relatively abundant potential of wind and solar energy, produced in the form of electricity, into heat, chemicals and fuels. In fact, electrification has the potential to release major progress on sustainability and reduction in fossil energy and feedstock use. Electrification of conventionally fired chemical reactors has the potential not only to reduce CO₂ emissions but also to provide more flexible and compact solutions for heat generation.

Under the assumption that the cost of electricity is going down in the future and more and more renewable electricity will be available, it makes sense to replace the combustion step which today supplies the heat of reaction in the steam reformer with an electric device, with the possibility to eliminate the CO₂ emissions contribution from furnace burners.

In addition, the possibility to maximize the efficiency of thermal exchange may also help to reduce the feed consumption, thereby limiting CO₂ emissions from the process side as well.

It must also be underlined that the thermal design of a steam reformer is a quite complex task and requires a specialized knowledge of such type of fired heaters. Indeed, the presence of a furnace with burners installed inside makes steam reformer configuration quite complex and in the overall the plant characterized by quite large footprint.

Under such basis a reconfiguration of reactor geometry is required matching the need for CO₂ emissions reduction with the feature of a more compact design that may in principle results in a CAPEX reduction as well as easier maintenance and possibility of ease of transportability. US 2020/354216 A1 discloses a reforming reactor comprising a first catalyst bed comprising an electrically conductive material and a catalytically active material and at least two conductors electrically connected to the electrically conductive material and to an electrical power supply.

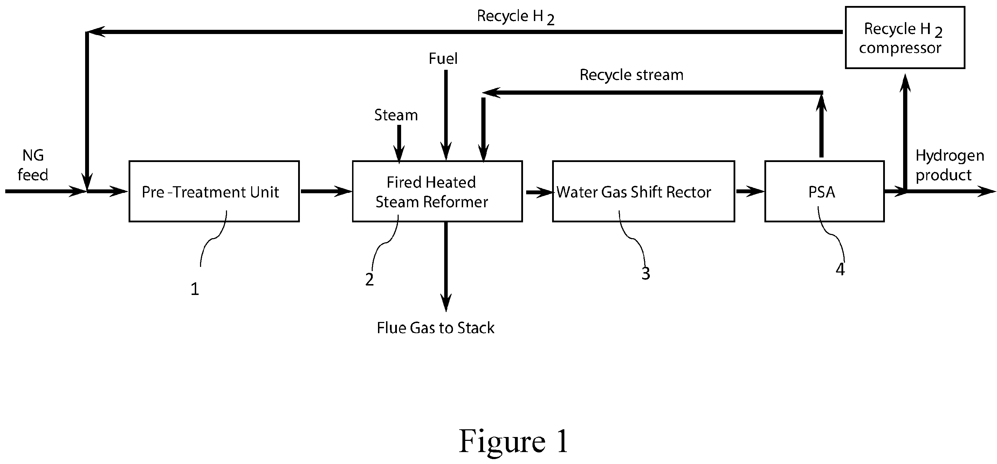

According to the prior art, and making reference to Fig. 1, the process architecture of a conventional Hydrogen Production Unit (HPU) with steam reforming of natural gas feedstock includes the following conventional process steps:
(i) natural gas compression (not shown) and preheating,
(ii) olefins hydrogenation and removal of sulfur components (in a pre-treatment unit 1),
(iii) steam reforming (in a fired heated steam reformer 2),
(iv) heat recovery from both process stream and flue gas by Steam Generation and steam superheating (not shown),
(v) conversion of carbon monoxide by shift reaction (in a water gas shift reactor 3),
(vi) purification of hydrogen by pressure swing adsorption (in a pressure swing adsorber, or PSA 4).

Optionally in between steps (ii) and (iii) a pre-reforming step may be added, depending on the hydrocarbon feedstock used.

Making reference to Figure 1, a block diagram of a conventional natural gas hydrogen production unit is shown, wherein export steam is not illustrated but is anyway present and it is described below and wherein the natural gas feedstock is fed under pressure to a pre-treatment unit 1 for the removal of those compounds that are detrimental for the steam reforming catalyst downstream. The pre-treatment unit 1 performs a first hydrogenation step and a second desulfurization step, optionally combined in one single step. The first step is conducted in a fixed bed catalytic reactor using CoMox or NiMox catalyst to hydrogenate organic sulfur into H₂S and organic chlorine components into hydrogen chloride. Olefins present in the feed are hydrogenated as well in this step.

The required hydrogen (~3 mol%, typical value with natural gas feedstock) is recycled from the H₂ product stream and/or taken from an available hydrogen source from battery limit. The produced hydrogenated compounds are then sent to the desulfurization step, in which they react typically with zinc oxide beds for H₂S adsorption, optionally equipped with a material for hydrogen chloride adsorption.

The treated feedstock is then mixed with a controlled quantity of steam according to the selected value for the steam/carbon molar ratio (S/C = 3 mol/mol, typical value) and preheated at 550°C (typical value) in the convection section of a reformer furnace 2.

The heart of the process is the endothermic reaction of methane with steam over Ni catalyst (reaction 1).

CH₄ + H₂O ⇔ CO + 3H₂ ΔH₀ =+206 kJ/mol (1)

The reaction is conducted in a tubular catalytic reactor heated up by external fuel combustion in the radiant section of a furnace. In parallel to the main steam reforming reaction, the water gas shift reaction (reaction 2) converts part of the CO produced by the first reaction into additional H₂ and CO₂.

CO + H₂O ⇔ CO₂ + H₂ ΔH₀ = - 41 kJ/mol (2)

The process steam added to the feed is in excess of the stoichiometric quantity so as to improve the hydrocarbons conversion and prevent any carbon deposition over the catalyst. Reforming temperatures are selected in a high range (typically 850 ÷ 920 °C) in order to obtain high hydrogen yields. The operation of the steam reforming reaction inside a fired heater causes an excess heat generation related to the low thermal efficiency of the radiant section. The heat in excess is normally recovered in the convection section through high pressure steam generation.

Besides this, additional steam is generated by the process gas boiler employed to cool down the process syngas at the outlet of the steam reformer. The total steam produced is more than necessary for the process itself, therefore, a quantity of export steam is made available at battery limits as a by-product. The cooled process gas is then fed to a high temperature shift conversion stage (HTS) at an inlet temperature of about 320 °C.

The HTS shift reactor 3 is a fixed bed adiabatic reactor using an iron/chromium/copper oxide catalyst which converts the carbon monoxide and steam present in the syngas into additional hydrogen and carbon dioxide according to the water gas shift reaction (reaction 2). In some cases, an additional stage of shift conversion at lower temperature (LTS) is installed downstream and operated.

The process syngas at the outlet of the shift conversion stage is cooled down to about 40 °C through a heat recovery section and a final cooler., Downstream, the equipment for water condensate removal is installed, from which the syngas is sent to a PSA unit 4 to perform the raw hydrogen purification.

The PSA unit 4 operates through short adsorption/ desorption cycles conducted over selected adsorbent materials and operated in parallel vessels at different time stages.

The hydrogen is released from the PSA unit 4 at the set pressure (typically about 20 barg for refinery applications, for example). The hydrogen recovery factor of PSA can achieve values up to 90%, while the hydrogen balance, together with the impurities present in the raw hydrogen stream, is released in a purge gas stream (off-gas or recycle stream) and leaves the PSA unit 4 at low pressure (~0.3 bar g). PSA unit 4 can reach hydrogen +purity up to 99,9999% vol. Typical hydrogen purity specification in refinery is >99.9%.

The off-gas from PSA recovered at near atmospheric pressure and containing the produced CO₂ and residual hydrogen (an exemplary composition of this stream being CH₄ 18%mol, CO 10,24%mol, CO₂ 45,10%mol, H₂ 26%mol, H₂O 0,55%mol) is recycled back (recycle stream) to the reformer furnace 2, where residual hydrogen and CO are burned with make-up fuel and the generated flue gas is sent to the stack.

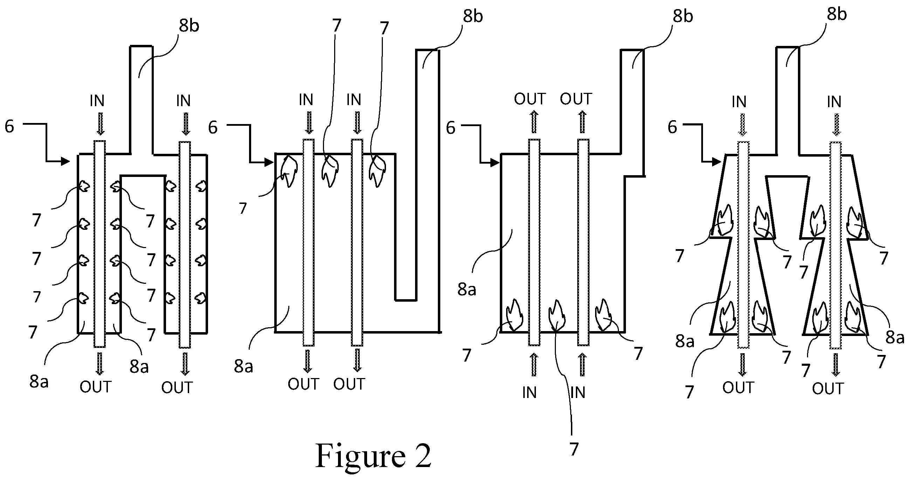

With specific reference to the steam reformer furnace 6 (Figure 2), in a conventional fired heated reformer, different arrangements are available for burners inside the furnace. With reference to Figure 2a-2d, the burners 7 may be positioned on the two sides of the lateral walls (side fired) (Fig. 2a); on the top of a radiant section 8a (top-fired) (Fig. 2b); although other configurations are available in the market such as bottom firing design (Fig. 2c) or the terrace- wall arrangement (Fig. 2d).

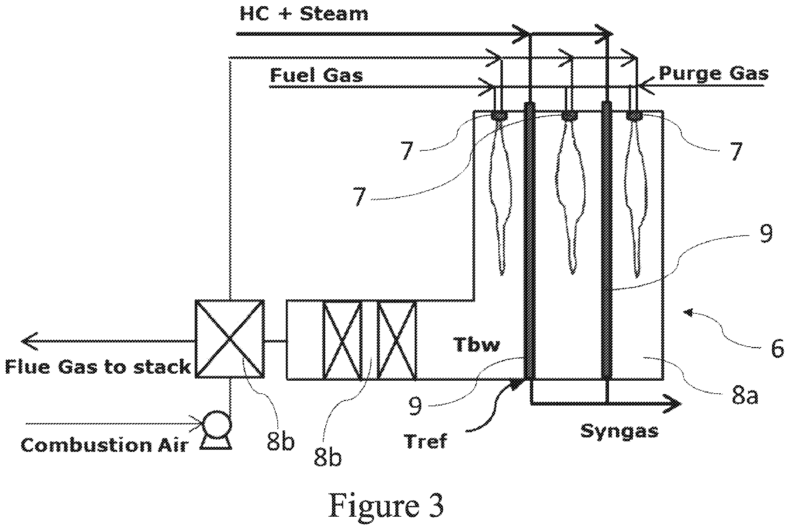

More in detail, Figure 3 shows a schematic representation of a top fired steam reforming furnace 6 according to the prior art, comprising a radiant section 8a with reforming tubes 9 which contain the catalyst (and consequently also called herein below catalytic tubes 9) and burners 7 on the roof, and a convection section 8b where the flue gases coming from the radiant section 8a are cooled down by preheating the process streams, generating steam and optionally preheating the combustion air flow.

Flue gases are discharged into the atmosphere through an induced draft fan and a stack (not shown).

The thermal efficiency of the furnace radiant section 8a, where only the reaction duty is transferred, determines the temperature of the flue gas stream at the exit from the radiant section 8a, which is the so called "bridge wall temperature" or T_{bw}. Its value, together with the flue gas flowrate derived by the overall heat balance, determines the heat available for downstream convective heat recovery in the convection section 8b.

Burners 7 are usually fed with fuel and off-gas recovered by downstream PSA 4.

Each catalytic tube 9 is essentially a fixed bed reactor, where the feed is entering at the top and leaving at the bottom of the reformer radiant section 8a through curved connections, called pigtails (not shown), which allow enough movement to accommodate the thermal expansion of the tubes.

In order to withstand the process conditions, the catalytic tubes 9 are made of special materials such as HP 25/35Ni-Cr alloy, able to withstand metal temperatures up to 1000°C. Due to the presence of the flame from burners 7, it is mandatory to well ensure the flame is properly developed along the overall length of the catalytic tubes 9.

For such reason, typically, the length of the catalytic tubes 9 is in the range of 10-13 meters with an internal diameter from 7.6 to 12.7 cm. Thickness is normally calculated on the basis of creep strength data with a targeted lifetime of 100000h at the maximum metal temperature. This is mandatory due to the presence of flame in close proximity to the metal catalytic tube 9 in the radiant section 8a.

The key information to calculate the number of catalytic tubes 9 in the radiant section 8a is the thermal duty calculated through the heat and material balance around the reformer. Once the average heat flux and the surface of each single catalytic tube 9 is fixed, the number of catalytic tubes 9 can be determined.

On the basis of the above, fired heated steam reformers 2 according to the prior art are designed in order to guarantee the required thermal exchange surface, more than the required catalytic volume. Tube material limit and corresponding heat transfer is the limiting step in the design. Accordingly, usually the installed catalyst volume is overdesigned compared to the actual need for reaction to reach thermodynamic equilibrium at the outlet reforming temperature.

Once the main geometrical parameters of the reformer furnace 6 are defined, it will be possible to simulate the behavior of the radiant section 8a on the process and flue gas sides, calculating the temperature profile along the radiant section 8a and on the catalytic tubes 9. The metal temperature profile along the catalytic tubes 9 is the starting point for calculating the thickness of the catalytic tubes 9.

In the conventional design of a fired heated steam reformer furnace 6, attention should be paid to the heat distribution along the catalytic bed, in order to minimize the regions where coke formation occurs (mainly as a consequence of feed cracking or CO disproportionation). In order to minimize the possibility of coke formation, a large amount of extra steam is added to make sure that the reactor 2 is well beyond the thermodynamic region for coke formation.

Electrical steam reforming has been studied a lot in the last years. In this context, still recently, Haldor Topsoe has published the results of a joint research work they are carrying out in collaboration with the Technical University of Denmark based on the application of electric power to internally catalytic coated tubes for steam reforming reaction [S.T. Wismann, J.S. Engbaek, S.B. Vendelbo, F.B. Bendixen, W.L. Eriksen, K. Aasberg-Petersen, C. Frandsen, I. Chorkendorff, P.M. Mortensen, Electrified methane reforming: A compact approach to greener industrial hydrogen production, Science, 2019, 364, 756-759]. According to this publication, experimental and model investigation is under progress to check the performance of the proposed solution. Still according to this publication, first results showed that the intimate contact between the electric heat source and the reaction site may drive the reaction close to thermal equilibrium, increase the catalyst utilization and limit unwanted byproduct formation.

In the paper reported by Haldor Topsoe, copper sockets are mounted at opposite ends of the external surface of the reactor catalytic tubes, and resistive heating is accomplished by applying an AC current along the tube, thereby allowing a direct heat supply by electrical resistive heating (ohmic heating) to the catalytic washcoat applied on the internal side of the tube. The positive feature highlighted in this paper is that owing to the uniform supply of heat to the process, the nearly constant established heat flux ensures that the gas mixture is kept close to equilibrium throughout the entire catalytic length. However, the proposed solution is reported to be applied to catalytic tubes with small diameter, being the catalyst washcoated on the catalytic tube wall, this technology needing to be implemented by a subject with a strong expertise in the preparation of washcoated catalyst, in particular taking into account that such preparation is carried out on metallic surfaces. Additionally, this technology is more time consuming and more expensive than the use of pellets catalyst.

Finally, according to WO2019228798, endothermic reactions heated by electrical resistance heating, and in particular a reactor system and a process for carrying out steam reforming of a feed gas comprising hydrocarbons where the heat for the endothermic reaction is provided by resistance heating are disclosed. According to WO2019228798, said reactor system comprises:
- a structured catalyst arranged for catalyzing said endothermic reaction of said feed gas, said structured catalyst comprising a macroscopic structure of electrically conductive material, said macroscopic structure supporting a ceramic coating, wherein said ceramic coating supports a catalytically active material;
- a pressure shell housing said structured catalyst;
- a heat insulation layer between said structured catalyst and said pressure shell; and
- at least two conductors electrically connected to said structured catalyst and to an electrical power supply placed outside said pressure shell, wherein said electrical power supply is dimensioned to heat at least part of said structured catalyst to a temperature of at least 200°C by passing an electrical current through said electrically conductive material.

In view of all above, it is evident the complexity of the system due to the use of a structured catalyst comprising a macroscopic structure of electrically conductive material, to provide heat by passing an electrical current through said electrically conductive material.

In fact, in case of damage of the macroscopic structure of electrically conductive material or of the insulating layer, the replacement of the entire reactor is needed.

In this context it is proposed the solution according to the present invention, with the aim of providing an apparatus for hydrogen production from a hydrocarbon feed, e.g. natural gas or biogas or another raw hydrocarbon feed, the apparatus comprising an electrically heated steam reformer wherein heat is provided through an easy to install or replace and simple to manage electrical device.

In particular, the apparatus for hydrogen production according to the present invention involves the possibility to use shorter catalytic tubes, thus obtaining a more compact system.

It is therefore an aim of the present invention that of providing an apparatus for hydrogen production allowing for overcoming the limits of the solutions according to the prior art and achieving the previously described technical results.

A further aim of the invention is that said an apparatus for hydrogen production can be implemented with substantially limited costs compared with reactors using structured catalysts according to the prior art.

Not last aim of the invention is that of proposing an apparatus for hydrogen production being substantially simple, reliable and less risky in terms of explosion related to combustion of the systems according to the prior art.

It is therefore a specific object of the present invention to provide an apparatus for hydrogen production as defined in claim 1.

Additional features of the apparatus for hydrogen production according to the present invention are specified in the following dependent claims.

The invention will be disclosed herein below for illustrative, but non limitative purposes, according to preferred embodiments, with reference in particular to the figures of the enclosed drawing, wherein:
- figure 1 shows a block diagram of a natural gas hydrogen production unit according to the prior art,
- figures 2a-2d show a schematic representation of different steam reformer furnaces according to the prior art;

- figure 3 shows a schematic representation of a top fired steam reformer furnace according to the prior art;
- figure 4a shows a schematic representation of a base unit of an apparatus for hydrogen production according to the present invention;
- figure 4b shows a schematic representation of an electrical heating element of an apparatus for hydrogen production according to the present invention;
- figure 5a shows a schematic representation with indication of path flow in the subsections system of a base unit for equivalent catalytic tube arrangement of an apparatus for hydrogen production according to an exemplary embodiment of the present invention;
- figure 5b shows a schematic representation of an electrical heating for each catalytic tube section of an apparatus for hydrogen production according to the present invention;
- figure 6a shows a cross section of an apparatus for hydrogen production according to the present invention;
- figure 6b shows a front section of the apparatus for hydrogen production of figure 6a;
- figure 7a shows the temperature profile along the catalytic tube in an electrical reformer according to the present invention; and
- figure 7b shows the temperature profile along the catalytic tube in a conventional fired heated reformer.

In particular, the apparatus for hydrogen production according to the present invention is based on the absence of burners in the furnace and adoption of a plurality of electrical devices in the form of electrical resistances that can be mounted on the outside of catalytic tubes, in order to sustain the thermal duty of the reaction with an efficient and easy to manage solution, both in terms of operation management and in terms of maintenance and even replacement due to damages.

Given the absence of burners, there is no need to burn fossil fuels to produce heat, therefore when the electricity to power the heating elements is derived from renewable sources, no CO₂ emissions are associated with the heat duty of the reformer.

In addition, given the fact that there is not the need to ensure the development of flame, no constraints are imposed on the design of the catalytic tubes, in particular relating to their length. Compared with the solutions according to the prior art, the use of heating elements allowing a more precisely targeted temperature profile lead to an overall significantly lower length of the tubes leading to a more compact system.

However, since it is anyway necessary to guarantee the minimum volume of catalyst to reach the desired thermodynamic equilibrium at the outlet of the catalytic tube, the equivalent length of 13m or less, due to the more precisely targeted temperature profile, has been achieved dividing the tubes in several shorter catalytic sections in series, thereby enabling in the overall for a more compact system. Additionally, this layout allows the use of different thicknesses of the catalytic tubes because each tube achieve different maximum temperature.

For tubes where process gas flows upward, to avoid fluidization of catalytic bed, a heavy device may be provided floating at the top of the catalyst bed or a similar solution may be implemented.

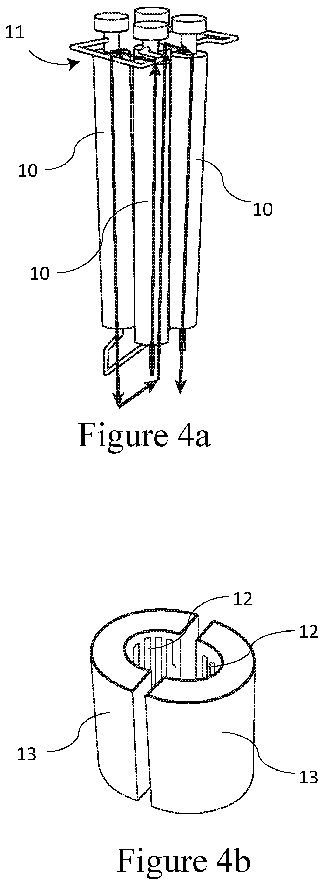

Making reference to figure 4a, the system of catalytic sections, each catalytic subsection being indicated by the numeral 10, represents the base unit 11 that can be replicated a certain number of times, depending on the overall addressed capacity of the plant.

With reference to heating devices, the apparatus for hydrogen production according to the present invention is based on the use of electrical resistances, indicated in figure 4b with numeral 12, which can be embedded or installed on the surface of half cylinders 13 arranged around the catalytic sections 10. The external portion of the half cylinders 13 is made of insulating material.

As an alternative, the electrical resistances 12 can be arranged directly inside the catalytic bed, i.e. in the core.

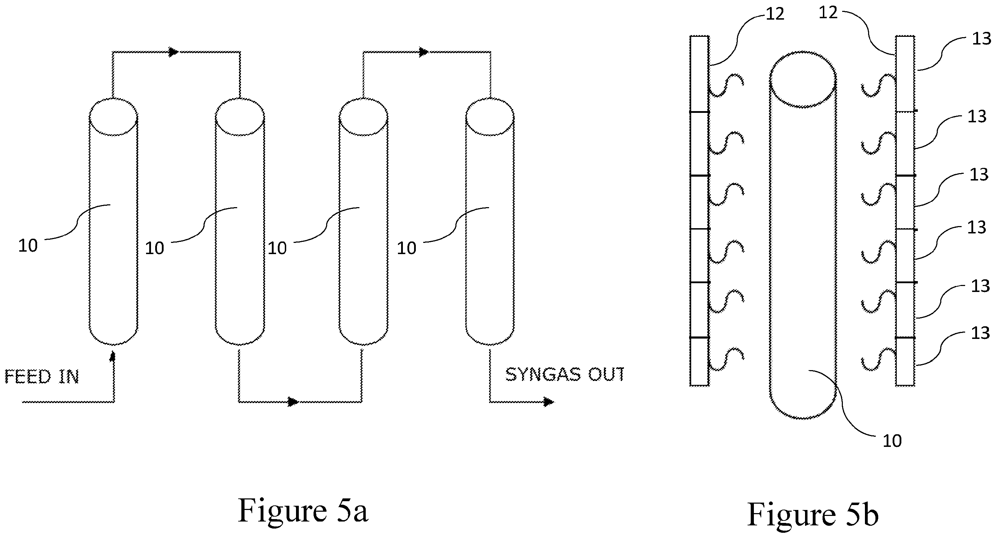

The base unit 11 is realized with a plurality of catalytic sections 10 arranged in series, in such a way that the overall length of the catalytic sections 10 would lead to the same conversion of a conventional tube. According to a preferred embodiment, shown with reference to Figure 4a and Figure 5a, four catalytic sections 10 are grouped together to result in an overall catalytic equivalent tube, each catalytic section 10 being characterized by the length of 3.5-4m. With reference to figure 5b, each catalytic section 10 has a plurality of heating devices, each device comprising an electrical resistance 12, distributed along the length of the tube, in order to determine an optimal temperature profile and therewith an optimal heat flux over the length of the tube, with the aim of optimizing the conversion. With reference to figure 4b, each electrical resistance 12 is positioned on the inside of a half cylinder 13 (Fig. 4b), the external portion of the half cylinder being made with an insulating material. The electrical resistance 12 wrapped around the catalytic section 10 is therefore in close contact with the catalytic section.

In an alternative embodiment, each catalytic section comprises two half-cylinders arranged around the catalytic section for its entire length.

In another alternative embodiment, the gas flow is directed from the top to the bottom in each catalytic subsection, thereby avoiding fluidization problems.

In another alternative embodiment, catalytic subsections can be arranged horizontally, leading to a significantly lower structure, allowing for easier maintenance.

In still another alternative embodiment, bayonet tubes can be used to ensure the gas flow from top side, from bottom side or horizontally. This solution also enables the use of a whole cylinder as electrical device.

As a consequence, on the basis of the above, the overall structure of the furnace can be simplified, as it eliminates the need for the burners, the convective section collecting flue gases, the stack for flue gas collection. Additionally, all auxiliaries related to air, flue gas and purge gas feeding, including those needed to capture the CO₂ from the flue gas, can be smaller or even be removed in some cases.

In addition, since the electrical devices can be installed in an optimized arrangement along each catalytic section 10, it is possible to ensure an optimized heat flux along the catalyst length, as a function of the thermal duty required over the length of the tube. In addition, being the electric devices uniformly distributed around the tubes, circumferential maldistribution commonly present in conventional reformers is extremely limited. Voltage of electric resistance can also be controlled in order to optimize their lifetime achieving the process requirement.

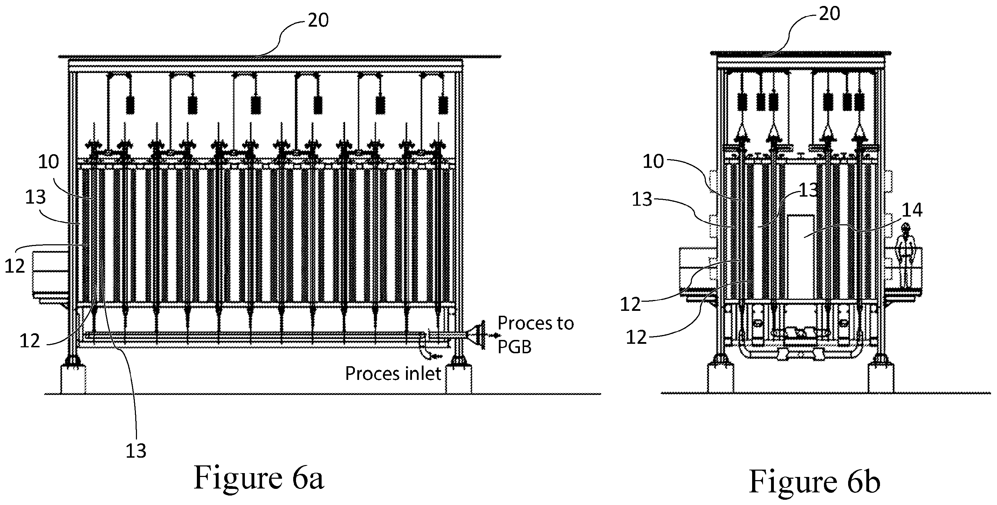

Making reference to figure 6a and figure 6b, showing details of an electrical furnace 20 of an apparatus for hydrogen production according to the present invention, for a representative plant capacity of 5,000Nm³/h of hydrogen, a total of 48 catalytic sections 10 are present, each section 10 being provided with a correspondent heating device.

An inspectional observation door 14 allows detection of hot spots and can bring to local mitigation of heat by modulating the electric power provided by the correspondent heating elements.

According to an exemplary embodiment of the present invention, electric elements are controlled by remote without presence of personnel on the steam reformer.

According to an exemplary embodiment of the present invention, as a consequence of the possibility to operate at lower temperature than the prior art, because of the optimized distribution of heat due to the use of electrical heating elements, the furnace can be provided with a system for hydrogen separation, directly inside the catalytic tube.

The invention will be further explained with reference to some specific implementation, as reported in the following examples.

### Example 1.

The apparatus for hydrogen production according to the present invention was used to treat a natural gas feed with the composition shown in Table 1:

**Table 1**

| Total Molar Component Fractions | % vol |
|---|---|
| Pentane | 0 |
| Butane | 0 |
| i-butane | 0 |
| Propane | 0.5 |
| Ethane | 2 |
| Hexane | 0 |
| Methane | 95.5 |
| CO | 0 |
| CO₂ | 0 |
| H₂ | 0 |
| H₂O | 0 |
| N₂ | 2 |
| O₂ | 0 |
| Ar | 0 |
| H₂S | 0 |
| SO₂ | 0 |
| i-pentane | 0 |

The main technical results achieved by the apparatus for hydrogen production according to the present invention were evaluated, in comparison with a traditional fired heated steam reformer, and are reported in Table 2.

**Table 2**

| Parameter | Fired heated Steam Reformer | Electrical Steam Reformer of the invention |
|---|---|---|
| Plant Capacity (Nm³/h) | 5000 | 5000 |
| Molar Steam - to - Carbon ratio | 3.0 @ SR | 2.8 |
| Tᵢₙₗₑₜ SR (°C) | 620 | 550 |
| Tₒᵤₜₗₑₜ SR (°C) | 860 | 870 |
| Hydrogen pressure, B.L. (barg) | 30 | 21.6 |
| Hydrogen Temperature, B.L. (°C) | 42 | 40 |
| Power Consumption (kWh/Nm³ H₂) | 0 . 06 (*) | 1.20^{(*)} |
| CO₂ Produced for | 0.408 | 0.00 |
| fuel burning to sustain reaction thermal duty (kgCO₂/Nm³ H₂) | | |

| | | |
|---|---|---|
| SR standing for Steam Reformer B.L. standing for battery limits (*) only related to steam reforming reactor - any consumption for downstream separation equipment is not included | | |

Efficiency to hydrogen has been calculated as Feed(LHV) + Fuel (LHV)/Hydrogen production (Nm³), LHV standing for Lower Heating Value.

The main technical features related to the four-subsections system referred to in the previous figures 4a and 5a and corresponding heat duty/flux are given in Table 3.

**Table 3**

| | | | | | | |
|---|---|---|---|---|---|---|
| Tube Section | | 1 | | 2 | 3 | 4 |
| Tot. number of tubes | | 1 | | 1 | 1 | 1 |
| Process Tube ID | mm | 114 | | 114 | 114 | 114 |
| Process Tube OD | mm | 126 | | 126 | 126 | 131 |
| Process Tube Length | mm | 3600 | | 3600 | 3600 | 3600 |
| Process Tube Out Surf. | m² | 1.42 | | 1.42 | 1.42 | 1.48 |
| Process Inlet Temp. | °C | 550 | | 684 | 756 | 815 |
| Process Outlet Temp. | °C | 684 | | 756 | 815 | 870 |
| Absorbed Duty | kW | 117.5 | | 105.5 | 92.2 | 78.8 |
| Avg. Heat Flux (1) | kW/m² | 82.5 | | 74.1 | 64.7 | 53.1 |
| Max Tube Metal Temp. | °C | (first 1/3 to last 1/3) | 741 to 771 | 780 to 816 | 825 to 858 | 875 to 908 |
| Avg Tube Metal Temp. | °C | (first 1/3 to last 1/3) | 702 to 755 | 767 to 805 | 815 to 849 | 865 to 899 |

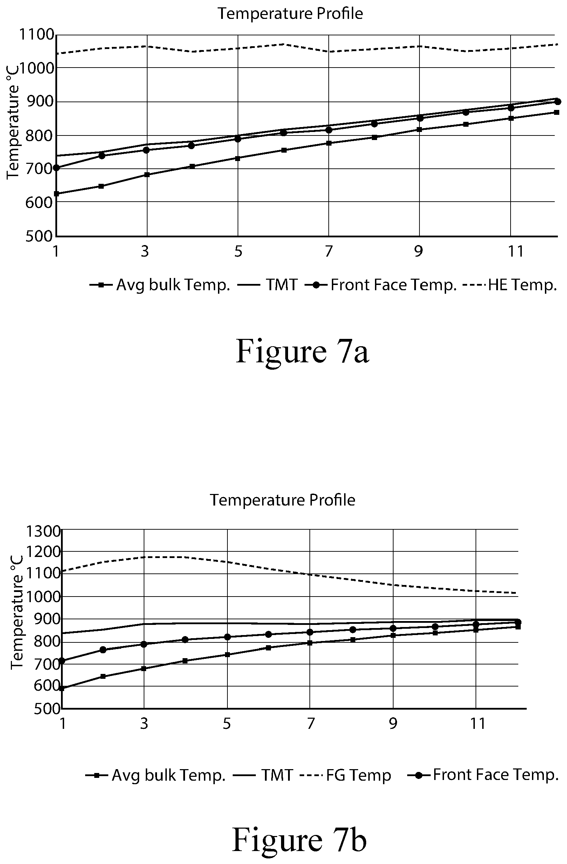

Figure 7a shows the temperature profile along the catalytic tube in an electrical reformer according to the present invention and Figure 7b shows the temperature profile along the catalytic tube in a conventional gas fired heated reformer. Figures 7a and 7b make evident that the main difference between conventional fired heated reformer and electrical reformer is the difference of tube metal temperature reached by catalytic tube for each application.

Figures 7a and 7b show that given the same average bulk temperature (inside the catalytic bed), with electrical heating it is possible to keep a lower portion of the tube at the highest temperature, therefore limiting the stress on it and in the overall to maintain the catalytic tube lifetime as high as possible.

Finally, in terms of overall dimensions, a reactor for hydrogen production according to the present invention is smaller than a fired heated reactor according to the prior art. In particular, the height of the construction is smaller and implies easier maintenance, lower civil construction costs and fewer risks of regulatory constraints.

Additionally, the different catalytic sections 10 can be arranged in easily transportable modules, which can then be easily installed on site, without the need for erecting a supporting structure.

In addition, the conventional design requires a large and complex structure to mount the tubes and burners and also the structure needed to access the equipment for maintenance.

The main benefits of the apparatus for hydrogen production according to the present invention are highlighted in the following.

First, the apparatus for hydrogen production according to the present invention allows not only for the avoidance of any flame impingement, but also for a more uniform heat flux along the catalytic sections, resulting in a smaller catalyst volume.

In fact, while in conventional steam reformer, catalytic tubes are heated through a long top flame (top fired steam reformer), few rows of side flames (side fired steam reformer) or two levels of vertical side flame (terrace steam reformer), heating through the use of electric elements located around the heating area of catalytic sections allows for a more uniform distribution of heat around each single catalyst section and lower maximum temperature, with benefit for the catalytic sections lifetime.

The apparatus for hydrogen production according to the present invention also allows to avoid other heating maldistribution affecting apparatuses for hydrogen production according to the prior art, such as change in purge gas composition, change in make-up fuel gas composition, uneven air distribution.

On the other hand, the possibility to operate at lower temperature also preserves the lifetime of the catalytic tubes.

The smaller catalyst volume together with the use of shorter catalytic sections 10 to replace the conventional catalytic tubes allows to realize a more compact system, with smaller overall footprint, with significant saving in foundations and more in general smaller size of the steam reforming reactor.

Additional advantages comprise modular configuration and easier maintenance, less complex design for the reformer furnace, in particular because of no need of a convective section and no need of fans, in contrast with the conventional design of a reformer furnace. Division of catalytic tubes in catalytic sections, grouped in sectors, allows for an optimal design for the specific location of the sector. This feature can bring to an extension of lifetime of each sector and to a uniformity of the lifetime between sectors. In addition, if a single sector fails, for example as a consequence of a deterioration of the catalyst, while the others, arranged in series, are in good conditions, replacement is limited to the failed sector, reducing impact. Moreover, until replacement of the damaged sector, the modular heating system would allow continued operation, by changing the temperature profile along the tubes, thereby optimizing output. This possibility adds to the system according to the present invention an additional advantage with respect to the conventional fired reformer.

Bottom inlet terminal allows to avoid to bring inlet piping system at high elevation from ground. Inlet Piping circuit is short with benefits for pressure drop and thermal losses. Also, the apparatus load bearing structure is reduced. Additionally, inlet location at the bottom allows to avoid long inlet pigtails at the top, reducing the relative risk to the management of thermal expansion of these ones combined with expansion of the tubes. In and outlet terminals are close to the fixed points of the system. No penthouse is required except for protection of catalytic section top flanges. The absence of fuel piping, combustion air ducts, purge gas piping, inlet piping system makes top area safer, needless of ordinary maintenance.

The optimization of heat distribution along the catalytic sections 10 also allows for the possibility to reduce S/C ratio and CO₂ emissions compared with gas heated steam reformer, and more in general a reduced feed consumption, absence of fuel consumption and optionally, no export steam. Such optimization implies an about 40% higher efficiency (LHV basis).

Due to absence of fuel consumption, no pollution due to combustion and no risk of explosion due to uncombusted gases in radiative area are present.

Noise due to combustion is not present, limited noise being due to the fluid dynamic, namely to the flow of process gases in piping.

An additional advantage is reduced starting time of the apparatus. In fact, all sectors can start simultaneously avoiding uneven maldistribution during starting time (typical for gas burned steam reformers).

Remote control of electric elements, without presence of personnel on the steam reformer results in a safer mode compared to conventional steam reformers.

The possibility of local mitigation of heat by modulating the electric power provided by the correspondent heating elements is a further advantage with respect to conventional steam reformer.

Moreover, in case palladium based membranes are used inside each catalytic section, the following benefits are obtained: (i) the reforming reaction can be carried out at temperature lower than 650°C, with a consequent reduction in energy consumption and enabling the use of less expensive materials for the reforming tubes; (ii) a CH₄ conversion as high as 90% can be achieved also at temperature lower than 650°C; (iii) the downstream water gas shift reactor can be removed since such reaction can be performed in the reforming itself.

The apparatus for hydrogen production according to the present invention also allows for flexibility arrangement for other endothermic reaction. In principle the solution may be applied for instance also for reactions such as Propane dehydrogenation for propylene production and ammonia cracking for hydrogen production. In fact, the flexibility due to the use of electrical devices providing heat to the system allows for a simple reconfiguration of the electrical heat sources, in order to adapt to different implementations.

The present invention was disclosed for illustrative, non-limitative purposes, according to a preferred embodiment thereof, but it has to be understood that any variations and/or modification can be made by the persons skilled in the art without for this reason escaping from the scope of protection, as defined in the enclosed claims.

## Claims

1. Apparatus for hydrogen production from a hydrocarbon feed, the apparatus comprising at least one steam reformer provided with an electrically heated steam reformer furnace comprising a plurality of catalytic tubes, divided into groups of catalytic tube sections (10) arranged in series, said groups being arranged in parallel, **characterised in that** said electrically heated steam reformer furnace is free of burners and a plurality of heat generating electrical devices in the form of electrical resistances (12) is mounted on the outside of the catalytic tube sections, to sustain the thermal duty of the reforming reaction.

2. Apparatus for hydrogen production according to claim 1, **characterised in that** said heat generating electrical devices have a half-cylindrical shape (13) and comprise electrical resistances arranged on a support element.

3. Apparatus for hydrogen production according to claim 2, **characterised in that** the support element is made of an insulating material and is arranged on the external portion of the heat generating electrical device, the electrical resistances being arranged on the internal portion of the heat generating electrical device around said catalytic tube sections.

4. Apparatus for hydrogen production according to any of the previous claims, **characterised in that** at least some of said heat generating electrical devices are configured to be operated independently from the others.

5. Apparatus for hydrogen production according to any of claims 1-4, **characterised in** comprising a system for hydrogen separation arranged between said catalytic tube sections arranged in series.

6. Apparatus for hydrogen production according to any of claims 1-4, **characterised in that** said catalytic tubes are provided with a system for hydrogen separation arranged directly inside said catalytic tubes.

7. Apparatus for hydrogen production according to claim 5 or 6, **characterised in that** said system for hydrogen separation comprises a membrane.

8. Apparatus for hydrogen production according to claim 7, **characterised in that** said membrane is a Pd based membrane.

## Patentansprüche

1. Vorrichtung zur Herstellung von Wasserstoff aus einer Kohlenwasserstoffbeschickung, wobei die Vorrichtung mindestens einen Dampfreformer umfasst, der mit einem elektrisch beheizten Dampfreformerofen versehen ist, der eine Vielzahl von katalytischen Rohren umfasst, die in Gruppen von in Reihe angeordneten katalytischen Rohrabschnitten (10) unterteilt sind, wobei die Gruppen parallel angeordnet sind, **dadurch gekennzeichnet, dass** der elektrisch beheizte Dampfreformer-Ofen frei von Brennern und einer Vielzahl von wärmeerzeugenden elektrischen Vorrichtungen in Form von elektrischen Widerständen (12) ist an der Außenseite der katalytischen Rohrabschnitte angebracht, um die thermische Leistung der Reformierungsreaktion zu unterstützen.

2. Vorrichtung zur Herstellung von Wasserstoff nach Anspruch 1, **dadurch gekennzeichnet, dass** die wärmeerzeugenden elektrischen Einrichtungen eine halbzylindrische Form (13) haben und elektrische Widerstände umfassen, die auf einem Trägerelement angeordnet sind.

3. Vorrichtung zur Herstellung von Wasserstoff nach Anspruch 2, **dadurch gekennzeichnet, dass** das Trägerelement aus einem isolierenden Material besteht und auf dem äußeren Teil der wärmeerzeugenden elektrischen Vorrichtung angeordnet ist, wobei die elektrischen Widerstände auf dem inneren Teil der wärmeerzeugenden elektrischen Vorrichtung um die katalytischen Rohrabschnitte herum angeordnet sind.

4. Vorrichtung zur Herstellung von Wasserstoff nach einem der vorhergehenden Ansprüche, **dadurch gekennzeichnet, dass** zumindest einige der wärmeerzeugenden elektrischen Einrichtungen so konfiguriert sind, dass sie unabhängig von den anderen betrieben werden können.

5. Vorrichtung zur Herstellung von Wasserstoff nach einem der Ansprüche 1 bis 4, **dadurch gekennzeichnet, dass** sie ein System zur Wasserstoffabtrennung umfasst, das zwischen den in Reihe angeordneten katalytischen Rohrabschnitten angeordnet ist.

6. Vorrichtung zur Wasserstofferzeugung gemäß einem der Ansprüche 1 bis 4, **dadurch gekennzeichnet, dass** die Katalyserohre mit einem System zur Wasserstoffabtrennung versehen sind, das unmittelbar innerhalb der Katalyserohre angeordnet ist.

7. Vorrichtung zur Herstellung von Wasserstoff nach Anspruch 5 oder 6, **dadurch gekennzeichnet, dass** das System zur Wasserstofftrennung eine Membran umfasst.

8. Vorrichtung zur Herstellung von Wasserstoff nach Anspruch 7, **dadurch gekennzeichnet, dass** die Membran eine Membran auf Pd-Basis ist.

## Revendications

1. Appareil de production d'hydrogène à partir d'une charge d'hydrocarbures, l'appareil comprenant au moins un reformeur à vapeur équipé d'un four de reformeur à vapeur chauffé électriquement comprenant une pluralité de tubes catalytiques, divisés en groupes de sections de tubes catalytiques (10) disposés en série, lesdits groupes disposés en parallèle, **caractérisés par le fait que** ledit four de reformage de la vapeur chauffé électriquement est dépourvu de brûleurs et d'une pluralité de dispositifs électriques générateurs de chaleur sous la forme de résistances électriques (12) est monté à l'extérieur des sections du tube catalytique, afin de soutenir la charge thermique de la réaction de reformage.

2. Appareil de production d'hydrogène selon la revendication 1, **caractérisé par le fait que** lesdits dispositifs électriques générateurs de chaleur ont une forme demi-cylindrique (13) et comprennent des résistances électriques disposées sur un élément de support.

3. Appareil de production d'hydrogène selon la revendication 2, **caractérisé par le fait que** l'élément de support est constitué d'un matériau isolant et est disposé sur la partie externe du dispositif électrique de génération de chaleur, les résistances électriques étant disposées sur la partie interne du dispositif électrique de génération de chaleur autour desdites sections de tubes catalytiques.

4. Appareil de production d'hydrogène selon l'une des revendications précédentes, **caractérisé par le fait qu'**au moins certains de ces dispositifs électriques générateurs de chaleur sont configurés pour fonctionner indépendamment des autres.

5. Appareil de production d'hydrogène selon l'une des revendications 1 à 4, **caractérisé par** la présence d'un système de séparation de l'hydrogène placé entre lesdites sections de tubes catalytiques disposées en série.

6. Appareil de production d'hydrogène selon l'une des revendications 1 à 4, **caractérisé par le fait que** lesdits tubes catalytiques sont pourvus d'un système de séparation de l'hydrogène arrangé directement à l'intérieur desdits tubes catalytiques.

7. Appareil de production d'hydrogène selon la revendication 5 ou 6, **caractérisé par le fait que** ledit système de séparation de l'hydrogène comprend une membrane.

8. Appareil de production d'hydrogène selon la revendication 7, **caractérisé par le fait que** ladite membrane est une membrane à base de Pd.
